(19) Europäisches Patentamt
European Patent Office
Office européen des brevets

(11) **EP 1 460 840 A1**

(12) **EUROPEAN PATENT APPLICATION**

(43) Date of publication:
**22.09.2004 Bulletin 2004/39**

(51) Int Cl.[7]: **H04N 5/44**

(21) Application number: **03290659.6**

(22) Date of filing: **17.03.2003**

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(71) Applicant: **DEUTSCHE THOMSON-BRANDT GMBH**
**78048 Villingen-Schwenningen (DE)**

(72) Inventors:
- **Weitbruch, Sebastian**
**78087 Monchweiler (DE)**
- **Thebault, Cedric**
**78050 Villingen (DE)**
- **Doser, Ingo**
**78166 Donaueschingen (DE)**

(74) Representative: **Ruellan-Lemonnier, Brigitte et al**
**THOMSON multimedia,**
**46 quai A. Le Gallo**
**92648 Boulogne Cédex (FR)**

(54) **Device and method for reducing burning effects on display means**

(57) Video pictures have different picture formats so that sidebars are displayed on the display device. Consequently, burning effects are different between used and unused areas of the screen. Therefore, the unused areas of the display device are driven with a signal which is varied in accordance with the video signal. Preferably, the signal intensity in at least a part of the active area of the screen is analysed and a medium value of such analysed area is used for driving the unused areas. As a result, the burning effect affects the used and unused areas equally and the sidebars are less disturbing since they are adapted to the video picture.

Active area
Analyzing area

*Surrounding areas*

Active area
Analyzing area

*Top-Bottom areas*

Analyzing area
Active area

*Left-Right areas*

**Fig. 7**

EP 1 460 840 A1

## Description

The present invention relates to a device and a method for driving a display means having a predetermined display area including the steps of providing a video signal for displaying a video image being smaller than the display area, so that one or more unused display sections remain on the display area, and driving the one or more unused display sections with at least one predetermined signal.

## Background

The "marking" or "burning" effect producing "sticking" or "ghost" images is generated by a change of the panel behaviour depending on the time a specific picture has been displayed. In other words, if a picture has been displayed a long time on a screen, the picture will stay visible as a shadow on the following scenes: this is called "ghost" image. As an example, if a black picture with white text is displayed on a screen during a significant time, the text will be readable on another scene later. This affects different display technologies like CRT (cathode ray tube) and PDP (plasma display panel) in various ways. In the case of plasma technology, this effect is quite strong and leads to very disturbing artefacts. This effect is very critical for all professional applications i.e. notice boards displaying a lot of static pictures as well as consumer applications (PC images, digital photo, etc.). On a PDP, two kinds of ghost images are known:

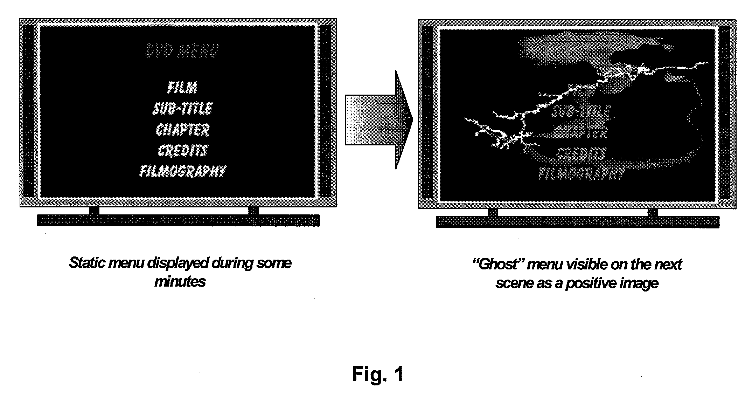

"Short term burning": the resulting ghost image (3 to 5%) of luminance is mainly a positive image ("burned" cells are brighter than others) which will disappear after a short time (some minutes up to some hours). The origin is not completely clear yet but it seems that this effect is related to some kind of charges which have been accumulated during the time a cell stays ON. Later these charges improve the luminance emitted by the cell even if only priming is ON. An example of this effect is shown on Figure 1.

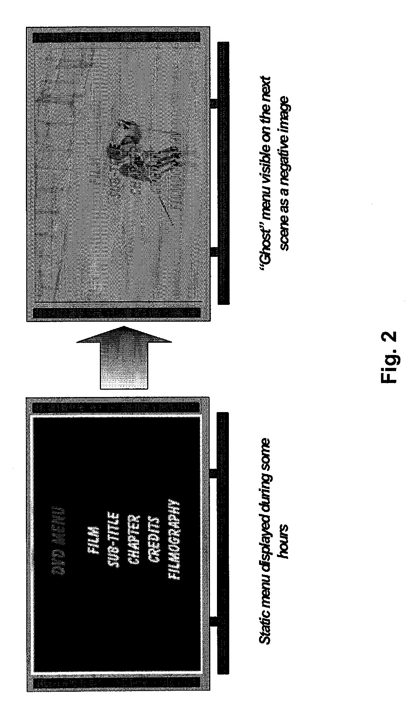

"Long term burning": the resulting stable sticking image is a negative image ("burned" cells are darker than others) related to a kind of aging of the plasma cell. Cumulative amplitude of such long term burning can go up to 50% lost of luminance. This effect will not disappear with time! The long term burning effect is illustrated on Figure 2.

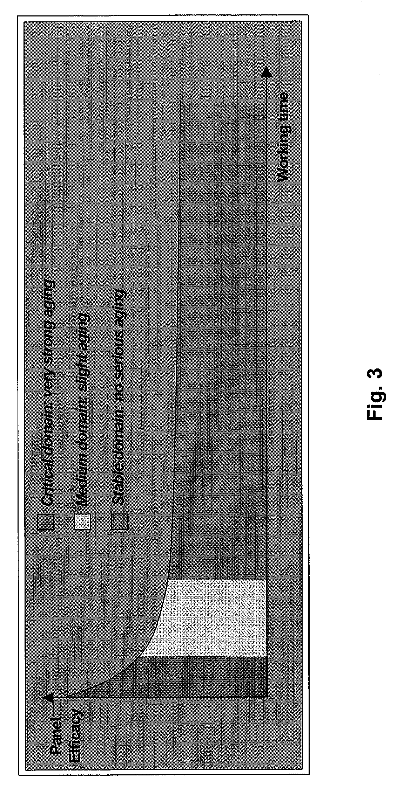

The long term burning is the more critical issue since this effect is not reversible and can reach 50% luminance lost. This effect is linked to a kind of aging of the PDP represented in Figure 3. At the beginning of the PDP lifetime, the aging process is quite strong and leads quickly to disturbing ghost images above all for professional applications using static pictures. Later this process will decrease.

Generally, when a picture has not been displayed on the full screen, a marking effect will appear since the rest of the screen (called "black bars") has not been used and, consequently, no charges have been accumulated and no aging of such areas has taken place.

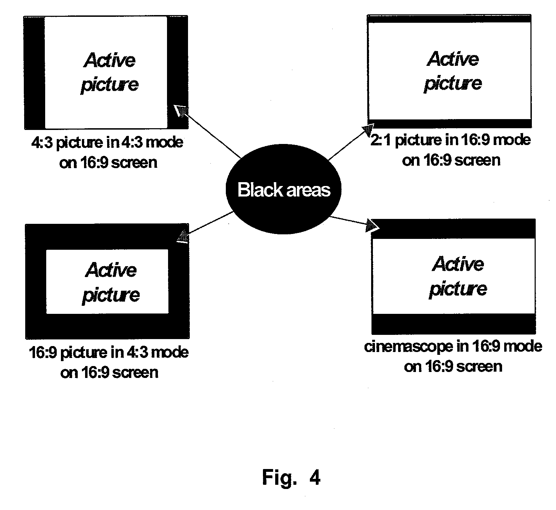

Figure 4 illustrates some possible situations. All the black areas represented in Figure 4 will not be affected by the short-term or long-term burning effect. For that reason, the screen will lose its homogeneity.

In order to tackle this specific problem, a letterbox detector as published in EP 0 913 994 A1 can be used. This algorithm provides the precise format of the input picture with the first active line and the last active line. Thus, the Plasma control circuit can be provided with the exact format of the input picture and the performed zoom on the screen. This gives the possibility to activate specific countermeasures.

Actual products provide a solution for the case of a 4:3 picture in 4:3 mode displayed on a 16:9 screen. In that case, the sidebars are replaced by a medium grey level (e.g. 128). However, no solution exists for the other cases listed before in Figure 4. Specifically, there are no solutions for a 2:1 picture in 16:9 mode on a 16:9 screen, a 16:9 picture in 4:3 mode on a 16:9 screen and a cinemascope in 16:9 mode on a 16:9 screen.

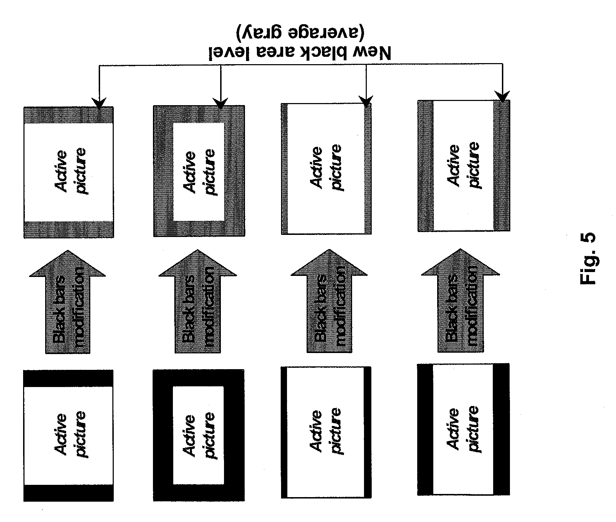

A previous invention of the present applicant proposed a compromise where a letterbox detector has been used in order to detect the black areas (first and last active lines) and to replace them with an overall grey level (e.g. 128). This solution is shown in Figure 5.

The problem with this solution is that the grey level does not take into account the picture content of the active part of the picture. In other words, if the active picture contains a dark scene producing almost no aging of the panel, grey black bars will be used in order to age artificially the non-active part. Then if more dark pictures are seen than luminous ones, the correction will be too strong.

Moreover, the human eye sensitivity depends on the overall panel luminance. Therefore, when the scene is dark, the eye will be disturbed a lot by grey sidebars whereas it will not be the same by luminous scenes.

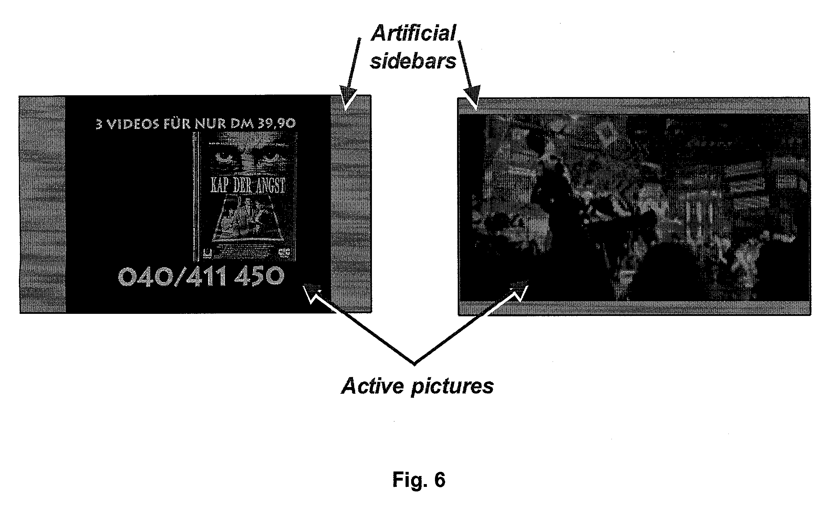

Above all, it will not be very pleasant to watch films with dark scenes having luminous sidebars as shown in Figure 6.

## Invention

In view of that it is the object of the present invention to reduce the visibility of burning effects of display means.

According to the present invention this object is solved by a method for driving display means having a predefined display area including the steps of providing a video signal for displaying a video image being smaller than said display area, so that one or more unused display sections remain on the display area, and driving said one or more unused display sections with at least one predetermined signal, wherein said at least one predetermined signal is varied in accordance with said video signal.

Furthermore, according to the present invention there is provided a device for driving display means having a predefined display area including determining means for determining one or more unused display sections remaining on the display area when driving said display means with a predetermined video signal and driving means connected to said determining means for driving said one or more unused display sections with at least one predetermined signal, wherein said at least one predetermined signal is variable in accordance with said video signal.

By applying the invention it is possible to artificially age the unused sidebars, wherein this aging process is not disturbing the viewer.

At least one predetermined signal for driving the unused sections of the display means may be computed on the basis of one or more analysing areas within the display area. Thus, the complete display area does not have to be analysed for determining the predetermined signal.

The one ore more analysing areas should directly abut on the one or more unused areas of the display means. This guarantees that the unused areas are primarily adapted to directly adjacent areas.

Advantageously, the at least one predetermined signal is computed by evaluating a histogram of brightness values of at least one of the analysing areas. The histogram provides detailed information of the brightness distribution of the analysing areas, so that an adequate brightness value can be chosen for the unused sections.

Preferably, the at least one predetermined signal is determined by applying a threshold to the histogram in order to obtain a significant part of the histogram and taking a medium brightness of the significant part for the at least one predetermined signal. This step leads to a significant brightness value of the analysing area.

The brightness of the at least one predetermined signal may be limited to a maximum brightness below the maximum practical brightness of the luminous elements of display means. This feature serves for avoiding to reach a constant high luminance value on sidebars, which is disturbing for the viewer.

Additionally, the brightness of the at least one predetermined signal may be corrected by a predetermined factor. Thus, the amplitude of the sidebar level can be softened all over the measurement area.

## Drawings

Exemplary embodiments of the invention are illustrated in the drawings and are explained in more detail in the following description. The drawings showing in:

- Fig. 1 an example of short term burning;
- Fig. 2 an example of long term burning;
- Fig. 3 a time diagram of a PDP aging process;
- Fig. 4 a sketch of different video formats;
- Fig. 5 a sketch for changing the black-bars into bars with an average-grey level according to the prior art;
- Fig. 6 grey sidebars on real video pictures according to the prior art;
- Fig. 7 a diagram for defining analysing areas according to the present invention;
- Fig. 8 histograms of analysing windows of three different video pictures according to the present invention;
- Fig. 9 histograms for calculating mid grey values of the three sequences of Figure 8;
- Fig. 10 the video pictures of Figure 8 with adapted side-bars;
- Fig. 11 a diagram for limiting the sidebars level;
- Fig. 12 a diagram for softening the sidebars level;
- Fig. 13 a first possible implementation of a "sidebars" ghost image pre-correction;
- Fig. 14 a diagram for demonstrating the frame delay issue; and
- Fig. 15 a second possible implementation of a "sidebars" ghost image pre-correction.

## Exemplary embodiments

The present invention is based on an automatic level computation for artificial sidebars. It is assumed that the PDP control circuit knows at any time the format of the active picture with the letterbox circuit outputs. Then, it is possible, for every kind of picture format and zoom format, to adapt the video level of the sidebars in order to suppress the marking effect and to limit the disturbing effect of those bars.

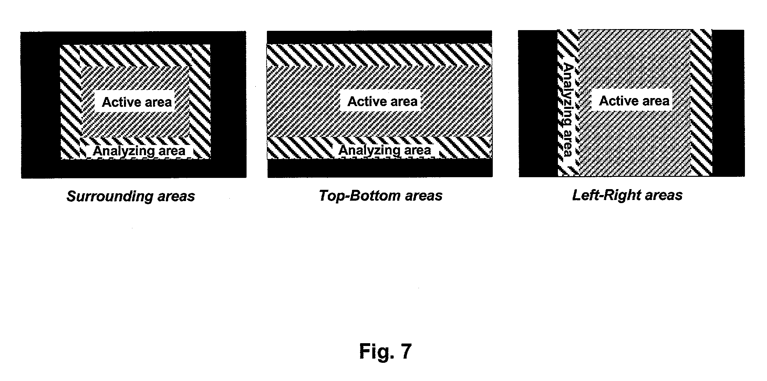

For that purpose, it is necessary to use an overall video level that is similar to those used by the border of the active part of the picture. In order to do that one can define an analysing area in the active picture as shown in Figure 7.

This area can have various forms but should correspond to the inside border of the active video signal where border means border in contact with a sidebar as detailed in the following examples:

- 4:3 active signals in a 4:3 mode on 16:9 screen: only left and right analysing areas are used.
- 2:1 signals in 16:9 mode on 16:9 screen: only top and bottom areas are used.
- 16:9 signal in 4:3 mode on a 16:9 screen: top, right, bottom and left areas are used.

Then, a global luminance histogram is computed for all selected analysing areas. This histogram can be a simplified (e.g. using a sub-set of all 256 available video levels) in order to simplify the computation. In any case, this histogram should represent the video content of the analysing areas.

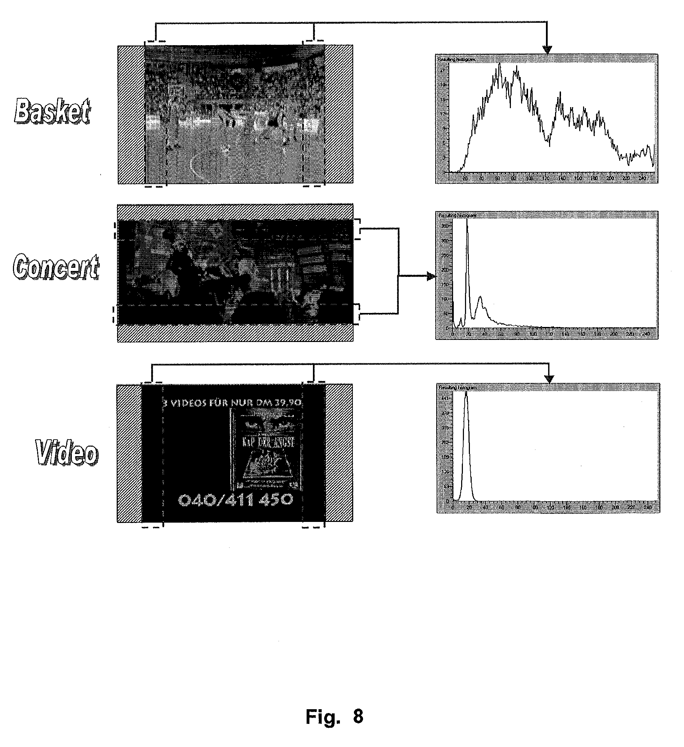

Figure 8 shows such computed histograms for the analysing widows (in dotted lines) of three typical sequences ("Basket", "Concert" and "Video"). The areas in slashed lines represent the sidebars background.

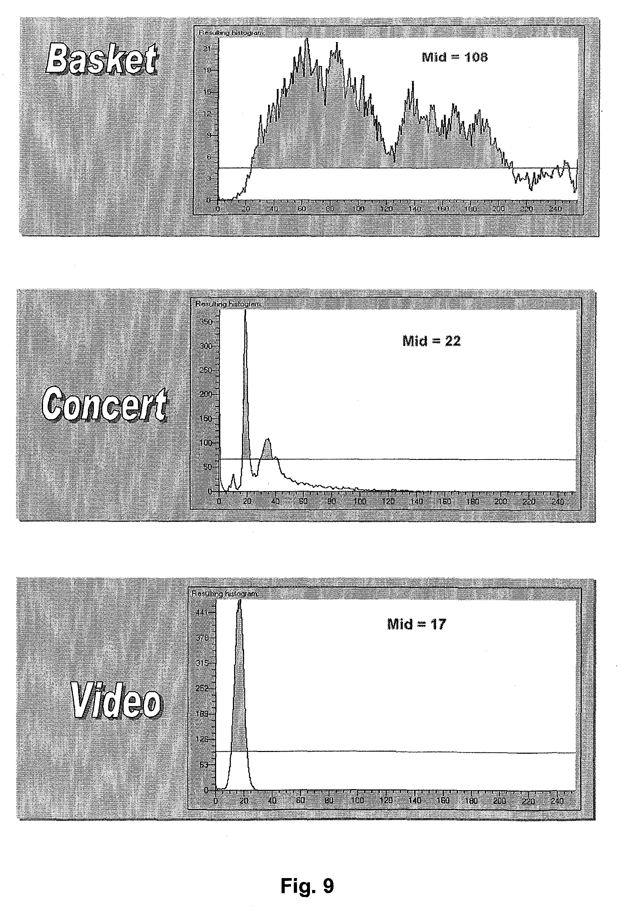

Now, the histograms will be analysed in order to extract the grey level to be used for the sidebars. For that purpose, the non-significant parts of the histogram will be neglected. That means that only the superior part of the histogram (e.g. 80%) will be kept to compute the mean value. This is illustrated in Figure 9, where values of the three histograms of Figure 8 are compared with predefined thresholds. Only those values above the respective threshold are used for computation. Based on this selection, a mid value is computed with the following results in our examples:

MID (Basket) =108
MID (Concert) =22
MID (Video) =17

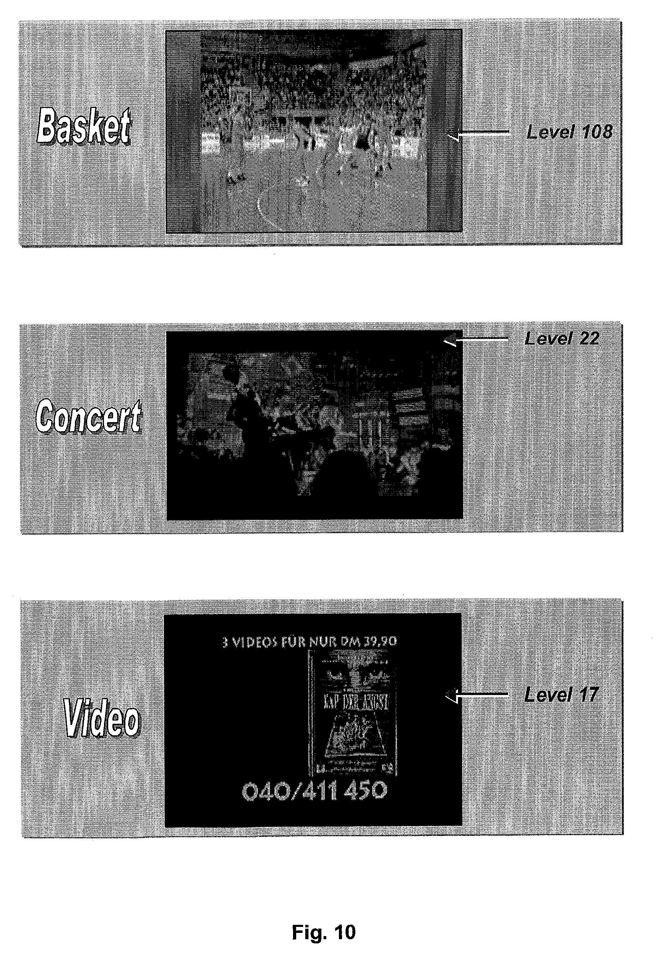

These three values will be now used for the computation of the background luminance of the sidebars as shown in Figure 10 for the three examples.

The advantage of such a concept is to reduce the disturbing effect brought by active sidebars since non-black sidebars have now a luminance level near to the main video content of the active picture.

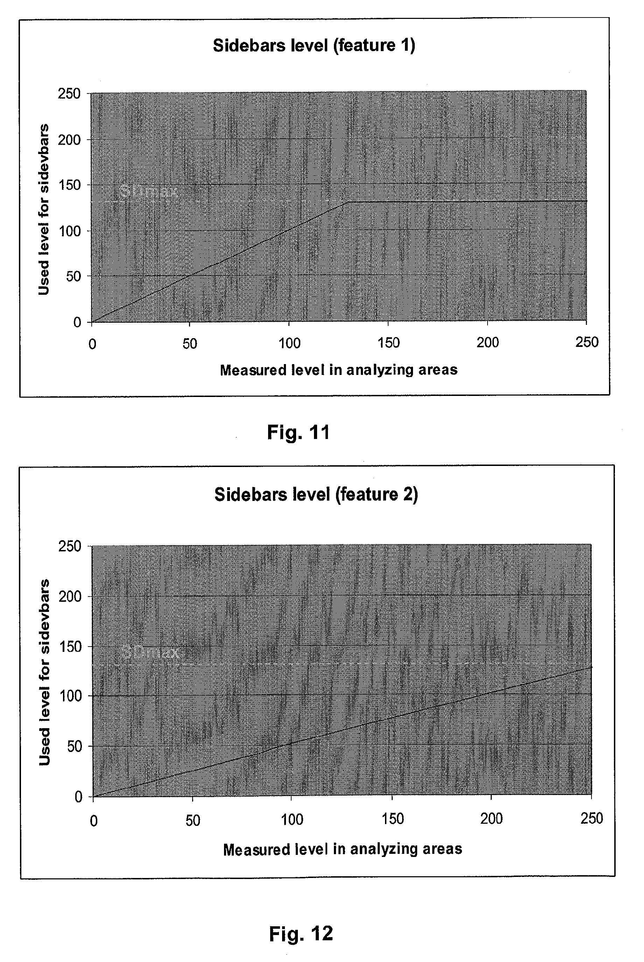

Furthermore, according to Figure 11, the sidebars level can be limited. This feature (feature 1) will limit the maximal video level of the artificial sidebars to a value SDmax given by an external micro-controller, which can be adjusted by the user or by every plasma set integrator.

In the present example the level for sidebars is chosen equally to that of the measured level in the analysing areas for low values below 130. Higher measured levels are limited to 130 representing SDmax. Thus, a non-linear characteristic is obtained.

Moreover, according to Figure 12 the overall amplitude sidebars level can be softened. This feature (feature 2) will use a multiplying correcting factor in order to reduce the dynamic of the correction as following:

$$Sidebars = \left(\frac{SD_{\max}}{255}\right) \times MeasuredLevel$$

In this case, the level SDmax will be given by an external circuit as well as the option "soften". The characteristic for determining the sidebars level is linear in this case.

Implementation

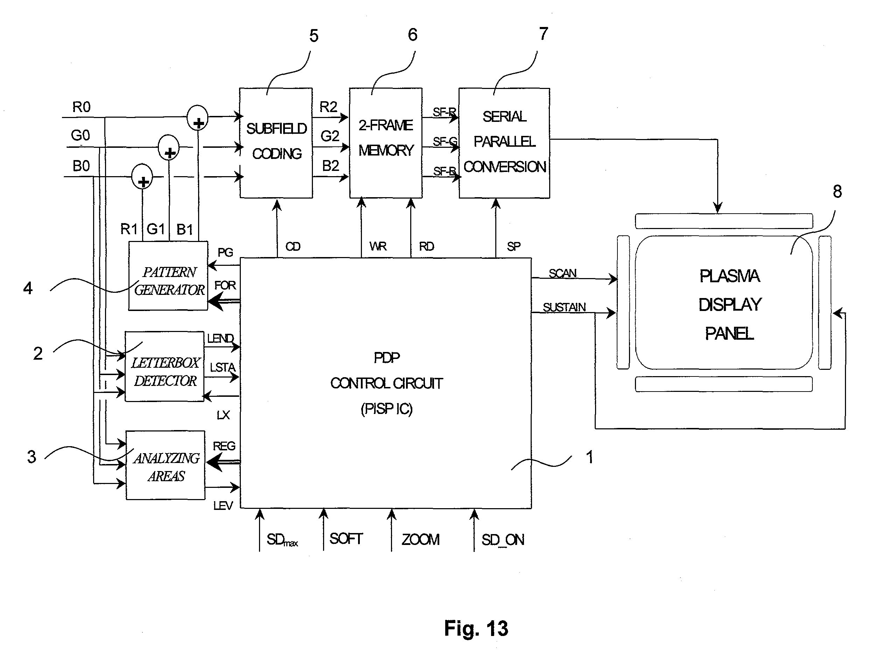

The block diagram of Figure 13 presents a possible hardware implementation of the above concept.

The activation of the sidebars pre-correction inside a PDP control block 1 will be done with the signal SD_ON (ON/OFF). If the feature is activated, the letterbox algorithm will be started.

A letterbox block 2 explicitly described in EP 0 913 994 A1 receives as input the incoming picture defined by the signals R0, G0, B0 and is activated through a control signal LX from the PDP control block 1. The letterbox block 2 computes the first active line (LSTA) and last active line (LEND) of this incoming picture and transmits them to the PDP control block 1.

Moreover, the control block 1 should receive as external information the displaying format ZOOM chosen by the user (4:3, 16:9 linear, 16:9 anamorphic etc.).

Based on these data, the control block 1 is able to define the position of the analysing areas (REG), which will be sent to an analysing areas block 3. This block 3 will perform the overall histogram analysis and will return to the control block 1 the information about the overall sidebars level LEV.

Based on all these data, the control block 1 is able to define the type of pattern defined by the signals R1, B1, G1 that should be added to the incoming picture R0, G0, B0.

The signals R1,B1,G1 for this pattern will be built in a pattern generator 4 activated with a signal PG and with the format parameters FOR coming from the control block 1. These parameters include the position of the sidebars as well as the level of the sidebars.

Furthermore, the additional signals SDmax und SOFT can be input into the control block 1 in order to affect the computation of the grey level of the sidebars. The signal SDmax represents the maximal sidebars level as explained in connection with feature 1 of Figure 11. The further signal SOFT (ON/OFF) corresponds to the choice between feature 1 of Figure 11 and feature 2 of Figure 12.

Finally, the corrected picture (incoming picture R0, G0, B0 + sidebars pattern R1, G1, B1) will be encoded towards sub-field information R2, G2, B2 by a sub-field coding unit and stored in a frame memory. The stored information SF-R, SF-G, SF-B are read one frame later and sent to the data drivers of the plasma display panel 8 after being converted by a serial/parallel conversion unit 7.

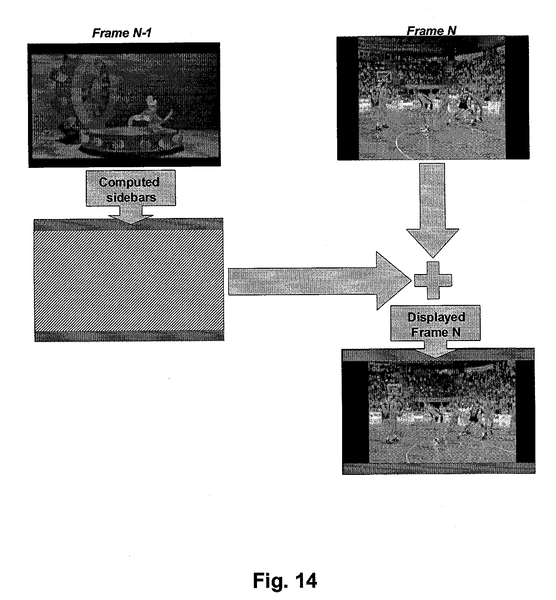

There is one frame delay between the computing of the sidebars level and its use as illustrated in Figure 14. The sidebars level and position can only be computed at the end of the frame and then, added to the next frame. This delay is mainly invisible. However, this could have a disturbing effect if the change is quite strong as in the case of Figure 14, where the picture format changes.

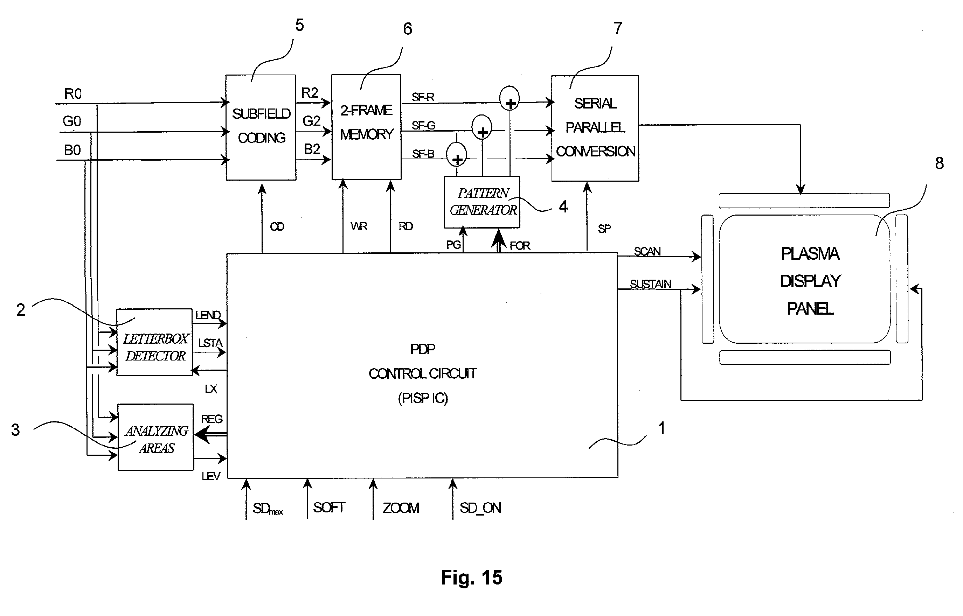

In order to overcome this issue, a sidebars precorrection by the pattern generator 4 at the sub-fields level might be implemented after the frame memory 6 as shown in Figure 15. In that case, the pre-correction will come in time with the right picture. To do that, the pattern generator 4 will include a sub-field transposing table in order to deliver, for each sub-field picture read from the frame memory 6, the corresponding sub-field pattern. The further units and functional connections correspond to those of Figure 13.

In the previous paragraphs, it was assumed, that the analysing areas are near to the active part of the picture. However, also the total active part can be used as analysing area.

## Claims

**1.** Method for driving display means having a predefined display area including the steps of
providing a video signal for displaying a video image being smaller than said display area, so that one or more unused display sections remain on the display area, and
driving said one or more unused display sections with at least one predetermined signal,
**characterized in that**
said at least one predetermined signal is varied in accordance with said video signal.

**2.** Method according to claim 1 wherein said unused sections include sidebars.

**3.** Method according to claim 1 or 2, wherein said at least one predetermined signal is computed on the basis of one or more analysing areas within said display area.

**4.** Method according to claim 3, wherein said one or more analysing areas directly abuts on said one or more unused areas.

**5.** Method according to one of the claims 1 to 4, wherein said at least one predetermined signal is computed by evaluating a histogram of brightness values of one of said analysing areas.

**6.** Method according to claim 5, wherein said at least one predetermined signal is determined by applying a threshold to said histogram in order to obtain a significant part of the histogram and taking a medium brightness of said significant part for said at least one predetermined signal.

**7.** Method according to one of the claims 1 to 6, wherein the brightness of said at least one predetermined signal is limited to a maximum brightness below the maximum practical brightness of luminous elements of said display means.

**8.** Method according to one of the claims 1 to 7, wherein the brightness of said at least one predetermined signal is corrected by a predetermined factor.

**9.** Device for driving display means (8) having a predefined display area including
determining means (2) for determining one or more unused display sections remaining on the display area when driving said display means (8) with a predetermined video signal and
driving means (1, 4) connected to said determining means (2) for driving said one or more unused display sections with at least one predetermined signal,
**characterized in that**
said at least one predetermined signal is variable in accordance with said video signal.

**10.** Device according to claim 9, wherein said unused sections include sidebars.

**11.** Device according to claim 9 or 10, further including analysing means (3) connected to said driving means (1, 4) for analysing one or more analysing areas within said display area to compute said at least one predetermined signal.

**12.** Device according to claim 11, wherein said one or more analysing areas directly abut on said one or more unused areas.

**13.** Device according to claim 11 or 12, wherein said analysing means (3) is capable of forming a histogram of brightness values of one of said analysing areas for computing said at least one predetermined signal.

**14.** Device according to claim 13, wherein said analysing means (3) is capable of applying a threshold to said histogram in order to obtain a significant part of the histogram and taking a medium brightness of said significant part for said at least one predetermined signal.

**15.** Device according to one of the claims 9 to 14, wherein said driving means (1, 4) is capable of limiting the brightness of said at least one predetermined signal to a maximum brightness below the maximum practical brightness of the luminous elements of said display means.

**16.** Device according to one of the claims 9 to 15, wherein said driving means (1, 4) is capable of correcting the brightness of said at least one predetermined signal by a predetermined factor.

DVD MENU
FILM
SUB-TITLE
CHAPTER
CREDITS
FILMOGRAPHY
CREDITS
FILMOGRAPHY

*Static menu displayed during some minutes*

*“Ghost” menu visible on the next scene as a positive image*

**Fig. 1**

DVD MENU
FILM
SUB-TITLE
CHAPTER
CREDITS
FILMOGRAPHY
Static menu displayed during some hours
"Ghost" menu visible on the next scene as a negative image

Fig. 2

Critical domain: very strong aging
Medium domain: slight aging
Stable domain: no serious aging
Panel
Efficacy
Working time

Fig. 3

Black areas
Active picture
4:3 picture in 4:3 mode on 16:9 screen
Active picture
16:9 picture in 4:3 mode on 16:9 screen
Active picture
2:1 picture in 16:9 mode on 16:9 screen
Active picture
cinemascope in 16:9 mode on 16:9 screen

Fig. 4

New black area level
(average gray)
Active picture
Active picture
Active picture
Active picture
Black bars modification
Black bars modification
Black bars modification
Black bars modification
Active picture
Active picture
Active picture
Active picture

Fig. 5

Artificial sidebars
Active pictures
3 VIDEOS FÜR NUR DM 39,90
KAP DER ANGST
040/411 450

Fig. 6

Active area
Analyzing area
Left-Right areas
Active area
Analyzing area
Top-Bottom areas
Active area
Analyzing area
Surrounding areas

Fig. 7

Basket
Concert
Video
3 VIDEOS FÜR NUR DM 39,90
040/411 450

Fig. 8

Basket
Resulting histogram
Mid = 108
0
3
6
9
12
15
18
21
0
20
40
60
80
100
120
140
160
180
200
220
240

Concert
Resulting histogram
Mid = 22
0
50
100
150
200
250
300
350
0
20
40
60
80
100
120
140
160
180
200
220
240

Video
Resulting histogram
Mid = 17
0
63
126
189
252
315
378
441
0
20
40
60
80
100
120
140
160
180
200
220
240

Fig. 9

Basket
Level 108

Concert
Level 22

Video
3 VIDEOS FÜR NUR DM 39,90
040/411 450
Level 17

Fig. 10

Sidebars level (feature 1)
Used level for sidevbars
Measured level in analyzing areas
SDmax
0
50
100
150
200
250
0
50
100
150
200
250

Fig. 11

Sidebars level (feature 2)
Used level for sidevbars
Measured level in analyzing areas
SDmax
0
50
100
150
200
250
0
50
100
150
200
250

Fig. 12

8
PLASMA
DISPLAY
PANEL
7
SERIAL
PARALLEL
CONVERSION
6
2-FRAME
MEMORY
5
SUBFIELD
CODING
SF-R
SF-G
SF-B
R2
G2
B2
SCAN
SUSTAIN
1
SP
RD
WR
CD
PDP
CONTROL CIRCUIT
(PISP IC)
SD_ON
ZOOM
SOFT
$SD_{max}$
PG
FOR
LEND
LSTA
LX
REG
LEV
PATTERN
GENERATOR
LETTERBOX
DETECTOR
ANALYZING
AREAS
R1
G1
B1
R0
G0
B0
4
2
3

Fig. 13

Frame N
Frame N-1
Computed sidebars
Displayed Frame N

Fig. 14

8
PLASMA DISPLAY PANEL
7
SERIAL PARALLEL CONVERSION
SP
SCAN
SUSTAIN
1
6
2-FRAME MEMORY
RD
WR
SF-R
SF-G
SF-B
4
PATTERN GENERATOR
FOR
PG
5
SUBFIELD CODING
CD
R2
G2
B2
PDP CONTROL CIRCUIT (PISP IC)
SD_ON
ZOOM
SOFT
$SD_{max}$
LEND
LSTA
LX
REG
LEV
LETTERBOX DETECTOR
ANALYZING AREAS
R0
G0
B0
2
3

Fig. 15

European Patent Office

# EUROPEAN SEARCH REPORT

Application Number
EP 03 29 0659

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 291 295 A (SRIVASTAVA) 1 March 1994 (1994-03-01)<br>* the whole document *<br>--- | 1-4, 7-12,15, 16 | H04N5/44 |
| X<br><br>A | PATENT ABSTRACTS OF JAPAN vol. 017, no. 404 (E-1405), 28 July 1993 (1993-07-28) & JP 05 075951 A (SONY), 26 March 1993 (1993-03-26)<br>* abstract *<br>----- | 1-3,9-11<br><br>4,12 | |
| | | | TECHNICAL FIELDS SEARCHED (Int.Cl.7) |
| | | | H04N |

The present search report has been drawn up for all claims

| Place of search | Date of completion of the search | Examiner |
|---|---|---|
| THE HAGUE | 25 July 2003 | Berwitz, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 03 29 0659

This annex lists the patent family members relating to the patent documents cited in the above-mentioned European search report.
The members are as contained in the European Patent Office EDP file on
The European Patent Office is in no way liable for these particulars which are merely given for the purpose of information.

25-07-2003

| Patent document cited in search report | Publication date | Patent family member(s) | Publication date |
|---|---|---|---|
| US 5291295 A | 01-03-1994 | NONE | |
| JP 05075951 A | 26-03-1993 | NONE | |

EPO FORM P0459

For more details about this annex : see Official Journal of the European Patent Office, No. 12/82